# EUROPEAN PATENT SPECIFICATION

(11) **EP 1 491 803 B1**
(45) Date of publication and mention of the grant of the patent: **19.07.2006**
(21) Application number: 04007957.6
(22) Date of filing: 01.04.2004
(51) Int. Cl.: F16K 15/20

(54) **Valve**
Ventil
soupape

(30) Priority: 26.06.2003 JP 2003182104
(43) Date of publication of application: 29.12.2004
(73) Proprietor: Pacific Industrial Co., Ltd., Ogaki-shi, Gifu-ken (JP)
(72) Inventor: Kayukawa, Hisashi, Ogaki-shi, Gifu-ken (JP)
(74) Representative: Kramer - Barske - Schmidtchen

(56) References cited:
- US-A- 2 126 845
- US-A- 2 188 713
- US-A- 2 236 585
- US-A- 2 240 096
- US-A- 3 310 064

## Description

This invention relates to a valve core according to the preamble of claim 1 which is inserted into and fixed in a throughbore formed in a valve stem communicating with an interior of a tire of an automobile, for example.

FIG. 10 illustrates one of conventional valve cores disclosed in JP-A-2002-340206. The disclosed valve core 1 comprises a core body 2, a moving shaft 3 inserted through the core body and having an end, and a disc-shaped rubber plug 4 fixed to the end side of the moving shaft. A compression coil spring 5 is provided in the core body 2 to bias the moving shaft 3 toward one side, so that the rubber plug 4 is usually pressed against an edge of a distal opening 8 of the core body 2. A sealing material 6 is provided on an outer periphery of the core body 2 to close a gap between an inner wall of a core mounting throughbore (not shown) and the outer periphery of the core body.

Cost reduction has recently been quite keen in the field of valve cores. The number of parts of the above-described valve core 1 has been reduced for the purpose of cost reduction in the valve cores.

US 2,126,845 refers to a tire valve. An outer end part of a valve casing surrounds partly a tubular element, through which a valve pin is inserted. The valve pin comprises at its lower end portion or plug which comes into abutement with the lower cylindrical edge of the tubular element, when the valve is closed. The valve plug element is formed of a harder metal than that of the tubular element. Between the valve casing and the tubular element a metal to metal seal is provided by abuting mutually complementally shaped smooth surfaces to each other.

US 2,239,585 which forms the preamble of claim 1 discloses a tire valve comprising a throughbore in which a valve seat member is inserted. A check valve member having a cylindrical abuting portion is fixed to a sliding valve pin. Upon closing the valve, a sharp feathered edge of the valve check member comes into abutement with a smooth and rounded outwardly flared wall of the valve seat member. The valve seat member has an outer curved surface which abuts with a curved portion of the through hole. The valve check member and the seating surface of the valve seat member are formed of hard brass, such that they "give" slightly under applied force.

An object of the present invention is to provide a valve core which can reduce the number of parts as compared with the conventional valve cores.

This object is solved by a valve core comprising the feature of claim 1.

In the above-described valve core, the core body is made of the metal having a hardness differing from the inner wall of the throughbore and the moving shaft. Accordingly, the body positioning abutment formed on the outer face of the core body abuts the inner wall of the throughbore, whereby the metal seal is provided to close the gap between the inner wall of the throughbore and the outer face of the core body, and the abutting taper formed on the plug abuts the inner edge of the distal opening of the core body, whereby the metal seal is provided to close the gap between the plug and the distal opening of the core body. Consequently, the number of sealing parts can be reduced in the above-described valve core as compared with the conventional ones. For example, the valve core can be constructed by three discrete parts including the core body, the moving shaft and an elastic member serving as the biasing member.

The valve core is characterized by a cylindrical sealing member detachably fitted with the core body, the sealing member including an outer sealing portion fitted with the outer periphery of the core body so as to be held between the core body and the inner wall of the throughbore thereby to adhere closely to the outer periphery of the core body and an inner sealing portion provided to adhere closely to an outer face of the plug, the outer and inner sealing portions being formed integrally with the sealing member.

In the above-described form, the inner and outer sealing portions are formed integrally on the cylindrical sealing member. Consequently, the number of sealing parts can be reduced in the above-described valve core as compared with the conventional ones. Moreover, since the cylindrical sealing member is fitted with the core body side, the structure of the moving shaft can be simplified and the number of parts of the moving shaft can be reduced as compared with the conventional construction in which a rubber plug is provided on the moving shaft. Furthermore, since the abutting taper of the plug abuts the inner edge of the distal opening of the core body, the inner sealing portion is prevented from being excessively pressed against the plug, whereupon the sealing performance can be stabilized. Additionally, since the body positioning abutment abuts the inner wall of the throughbore, the outer sealing portion can be prevented from being excessively pressed against the inner wall of the throughbore, whereupon the sealing performance can be stabilized.

Preferred embodiments are defined by the dependent claims.

In a preferred form, the inner sealing portion protrudes forward from an end of the core body. Consequently, the inner sealing portion is pressed against the plug side due to pressure of a compressed fluid charged into the interior of the throughbore inner than the valve core, whereupon the sealing performance can be improved.

In further another preferred form, the inner sealing portion includes a cylindrical portion with a distal end and a cylinder side taper formed by gradually spreading a distal end side inner diameter of the cylindrical portion, and the plug includes a columnar portion fitted into the cylindrical portion of the inner sealing portion and a shaft side taper adhering closely to the cylinder side taper. Furthermore, the cylindrical sealingmember is rotatably fitted with the core body. Consequently, when the valve core is screwed into the throughbore, the cylindrical sealing member is rotated relative to the core body, whereby sliding friction against the inner face of the throughbore can be reduced.

In further another preferred form, the biasing member comprises a compression coil spring inserted into a portion of the moving shaft protruding outward from the core body so as to be compressed between a spring stopper formed integrally with the end of the moving shaft and the end of the core body. Consequently, the number of parts can be reduced as compared with the case where the compression coil spring is provided inside the core body.

In another form not forming part of the invention, a sealing resin is coated on the core body so that at least the body positioning abutment and an inner edge of the distal opening of the core body are covered by the resin. Accordingly, the body positioning abutment formed on the outer face of the core body abuts the inner wall of the throughbore, whereby a seal is provided to close the gap between the inner wall of the throughbore and the outer face of the core body, and the abutting taper formed on the plug abuts the inner edge of the distal opening of the core body, whereby a seal is provided to close the gap between the plug and the distal opening of the core body. Consequently, the number of sealing parts can be reduced in the above-described valve core as compared with the conventional ones.

The invention will be described, merely by way of example, with reference to the accompanying drawings, in which:
FIG. 1 is a sectional side view of a valve core not showing all features of the present invention, the valve core being mounted in a core mounting throughbore;
FIG. 2 is a sectional side view of the valve core in an open state;
FIG. 3 is a sectional side view of the valve core;
FIG. 4 is a plan view of the valve core;
FIG. 5 is a sectional side view of the valve core in accordance with a second embodiment and not showing all features of the present invention;
FIG. 6 is a sectional side view of the valve core to which a cylindrical sealing member is attached according to the present invention.
FIG. 7 is a sectional side view of the cylindrical sealing member;
FIG. 8 is a sectional side view of the valve core mounted in the core mounting throughbore;
FIG. 9 is a sectional side view of the valve core in accordance with another embodiment of the present invention; and

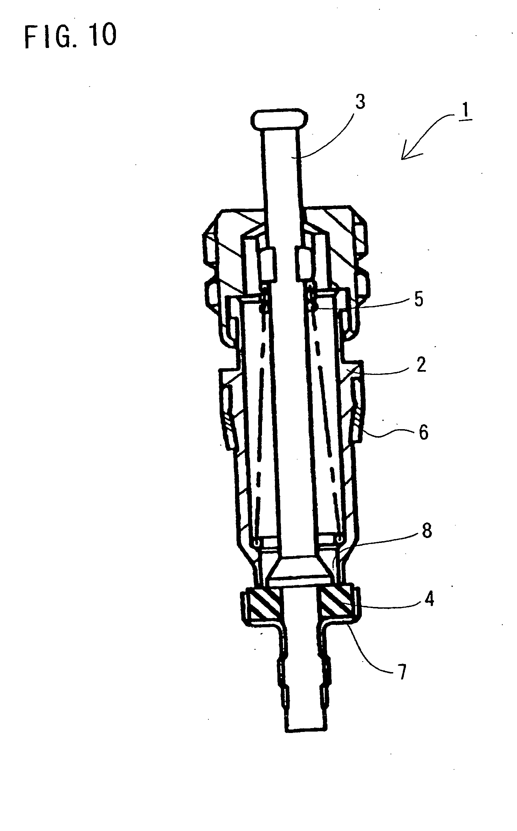

FIG. 10 is a sectional view of a conventional valve core.

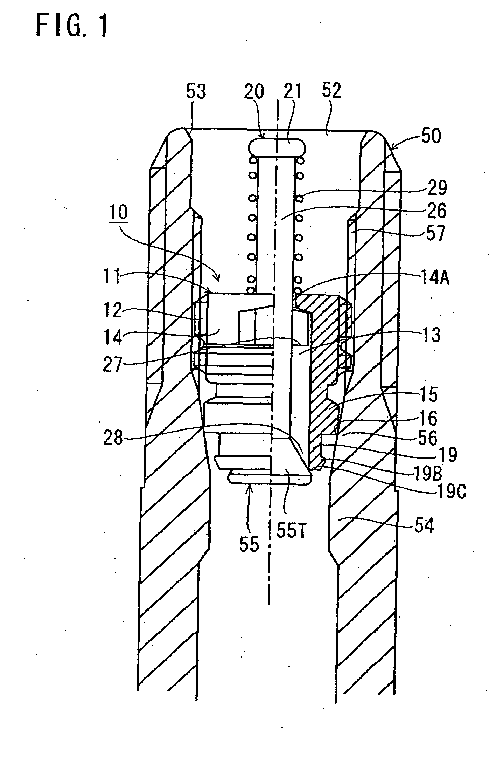

An embodiment not showing all features of the present invention will be described with reference to FIGS. 1 to 4. Referring to FIG. 1, reference numeral 50 designates a valve stem which is formed into the shape of a pipe. A core mounting throughbore 52 is defined in the valve stem 50. The throughbore 52 communicates with an interior of a tire (not shown), for example. The valve stem 50 has an upper charge opening 53 through which compressed air is supplied into the tire, as viewed in FIG. 1.

A female thread 57 is formed in an inner wall of the valve stem 50 near the charge opening 53. The valve stem 50 has a diameter-reduced portion 54 located inner than the female thread 57. The diameter-reduced portion 54 has a smaller diameter than the female thread 57. A stem side taper 56 is formed so as to be located between the female thread 57 and the diameter-reduced portion 54. The inner diameter of the taper 56 is gradually reduced toward the diameter-reduced portion 54. A valve core 10 of the invention is inserted through the charge opening 56 into the throughbore 52 to be threadedly engaged with the female thread 57.

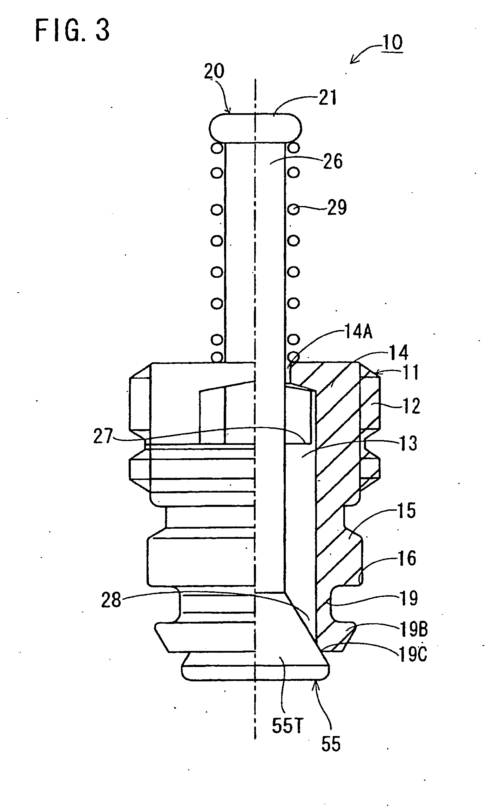

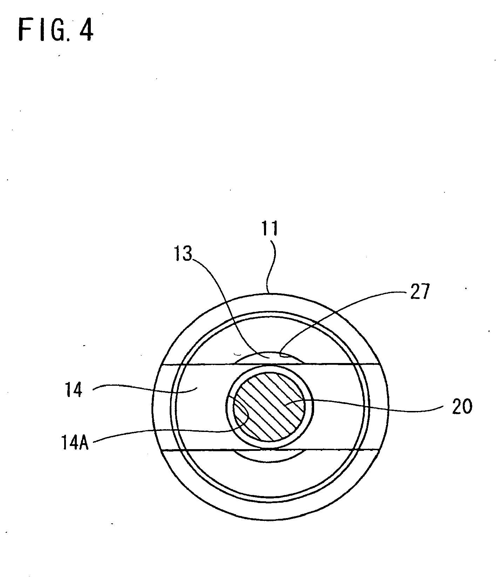

The valve core 10 comprises three parts, that is, a core body 11, a moving shaft 20 and a compression coil spring 29, as shown as an enlarged view in FIG. 3. The core body 11 is made of, for example, a metal having a hardness differing from the valve stem 50. The core body 11 is formed into a cylindrical shape and has a tapered distal end side in a direction of insertion into the throughbore 52. The core body 11 further has a central hole 13. The core body 11 has a proximal end formed with a bridge 14 extending across a proximal opening 27 of the central hole 13. Since the bridge 14 has a width smaller than an inner diameter of the opening 27 as shown in FIG. 4, part of the opening 27 is upwardly open. Furthermore, part of the opening 27 covered by the bridge 14 is open via a space below the bridge 14 to the throughbore 52.

A male thread 12 is formed on a proximal end of the cylindrical portion of the core body 11 and the bridge 14. The male thread 12 is adapted to engage the female thread 57 of the valve stem 50. The core body 11 has a distal end formed with a distal cylinder 19 having a smaller outer diameter than the other portion of the core body. A distal opening 28 is open at the distal end of the distal cylinder 19. The distal end of the cylinder 19 is formed with a sagittate portion 19B protruding outward gradually toward its rear. The distal cylinder 19 has a distal face perpendicular to an axial direction of the core body 11. The distal face and an inner peripheral face of the central hole 13 intersect substantially at a right angle to each other, whereby an abutting edge 19C is formed. Furthermore, the core body 11 has a body positioning abutment 15 formed on a portion thereof nearer to the proximal end than the distal cylinder 19. The body positioning abutment 15 has a larger outer diameter than the distal cylinder 19, whereupon a stepped portion is formed between the abutment 15 and the distal cylinder 19.

A portion of the bridge 14 intersecting a central line of the central hole 13 is formed with a shaft support hole 14A extending through the bridge as shown in FIG. 3. A moving shaft 20 extends through the shaft support hole 14A and the central hole 13. The moving shaft 20 is made of a metal having a hardness differing from the core body 11, for example. The moving shaft 20 includes a bar-like member 26, a plug 55 formed integrally on one of two ends of the bar-like member or a lower end as viewed in FIG. 3, and a spring stopper 21 formed integrally on the other end of the bar-like member. More specifically, for example, the bar-like member 26 with the plug 55 is forged and is then inserted into the core body 11. A compression coil spring 29 is provided around a portion of the bar-like member 26 projecting from the bridge 14. The.spring stopper 21 is crimped on the end of the bar-like member 26. The spring 29 is stretched between the spring stopper 21 and the bridge 14 thereby to bias the moving shaft 20 to the bridge 14 side.

The plug 55 has an abutment taper 55T with a diameter gradually increased as the plug departs further away from the bar-like member 26. When the plug 55 is biased toward the distal opening 28 of the core body 11 by the compression coil spring 29, a tapered portion 55T of the plug 55 abuts the abutment edge 19C of the core body 11 as shown in FIG. 3. Since the metal made into the core body 11 has a hardness differing from the metal made into the moving shaft 20, the abutment edge 19C of the core body 11 abuts the plug 55 of the moving shaft 20 such that a metal seal is provided.

The valve core 10 operates as follows. When to be fixed in the throughbore 52, the valve core 10 is inserted into the throughbore from the distal opening 28 side so that the male thread 12 is threadedly engaged with the female thread 57. With progress of the thread engagement, the outer edge 16 of the body positioning abutment 15 of the core body 11 abuts the stem side tapered portion 56, as shown in FIG. 1. Since the metal made into the valve stem 50 has a hardness differing from the metal made into the core body 11, a metal seal is provided. The valve core 10 is thus mounted in the throughbore 52 completely.

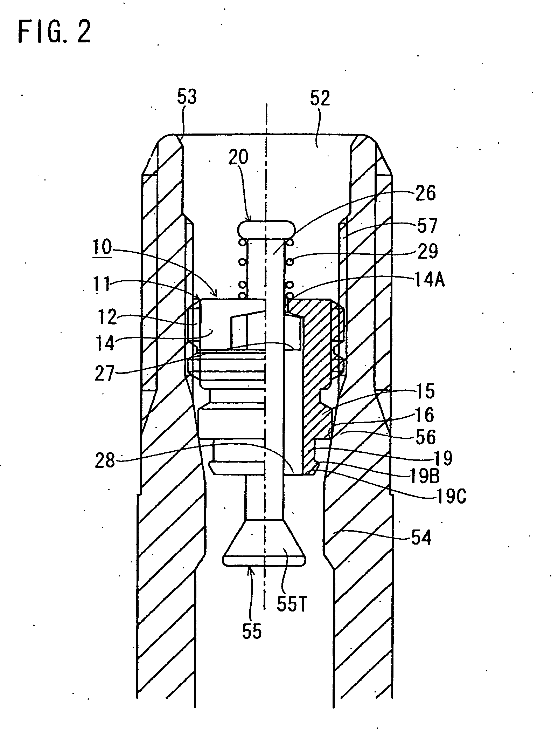

The plug 55 of the moving shaft 20 is subjected to a spring force of the compression coil spring 29 to be applied to the distal opening 28 of the core body 11, thereby being usually closed, as shown in FIG. 1. Compressed air is then charged through the throughbore 52 into the tire (not shown) as follows. For example, a charge pump is connected to the charge opening 53 of the valve stem 50 so that the compressed air is supplied through the throughbore 52. The moving shaft 20 is directly moved by pressure of the supplied compressed air against the compression coil spring 29, whereupon a gap is defined between the plug 55 and the distal opening 28, as shown in FIG. 2. As a result, the compressed air flows from the charge opening 53 side further into the throughbore 52.

The charge pump is disconnected from the charge opening 53 when the compressed air has been charged further into the throughbore 52. A spring force of the spring 29 and the pressure in the inner side of the throughbore 52 move the moving shaft 20 to the charge opening 53 side, so that the plug 55 recloses the distal opening 28. The tapered face of the plug 55 abuts the abutment edge 19C of the core body 11. Since the metal made into the moving shaft 20 has a hardness differing from the metal made into the core body 11, a metal seal is provided between the tapered face of the plug 55 and the abutment edge 19C.

In the valve core of the above-described embodiment, the metal made into the core body 11 has the hardness differing from those made into the stem side taper 56 of the throughbore 52 and the moving shaft 20. Accordingly, the body positioning abutment 15 of the core body 11 abuts the inner wall (stem side taper 56) of the throughbore 52, so that the metal seal is provided to seal the gap between the outer face of the core body 11 and the inner wall of the throughbore 52. Additionally, the tapered face of the plug 55 abuts the abutment edge 19C of the distal opening 28, so that the metal seal is provided to seal the gap between the plug 55 and the distal opening 28. Consequently, the number of sealing parts can be reduced in the valve core 10 of the embodiment as compared with the conventional valve cores. Furthermore, the valve core 10 can be composed of three discrete parts, namely, the core body 11, the moving shaft 20 and the compression coil spring 29.

In the foregoing embodiment, the metal made into the core body 11 has the hardness differing from those made into the inner wall of the throughbore 52 (the stem side taper 56) and the moving shaft 20. However, the same effect can be achieved when a sealing resin is coated at least on the body positioning abutment 15 and inner edge of the distal opening 28 (the abutment edge 19C).

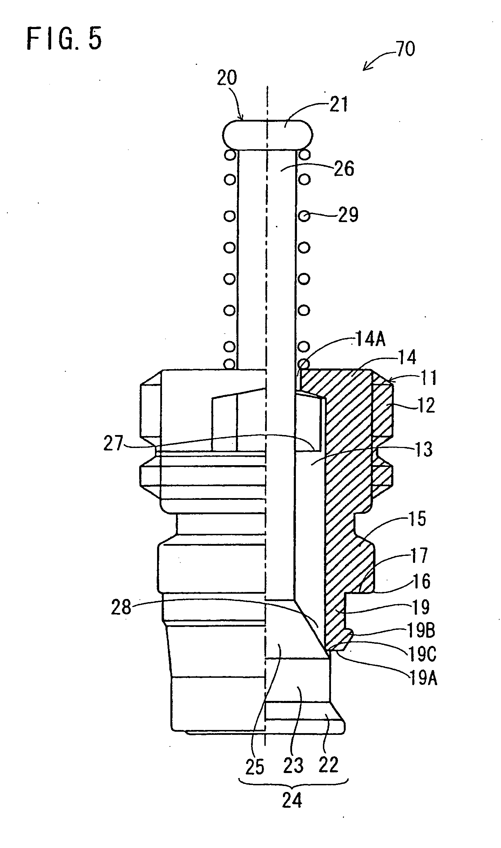

FIGS. 5 to 8 illustrate another or a second embodiment of the invention. The valve core 70 of the second embodiment differs from that of the previous embodiment in the structure of the plug 24. Furthermore, a cylindrical sealing member 30 is detachably attached to the core body 11. The following describes only the differences of the second embodiment from the first one. The identical or similar parts in the second embodiment are labeled by the same reference symbols as those in the first embodiment, and the description of these parts will be eliminated.

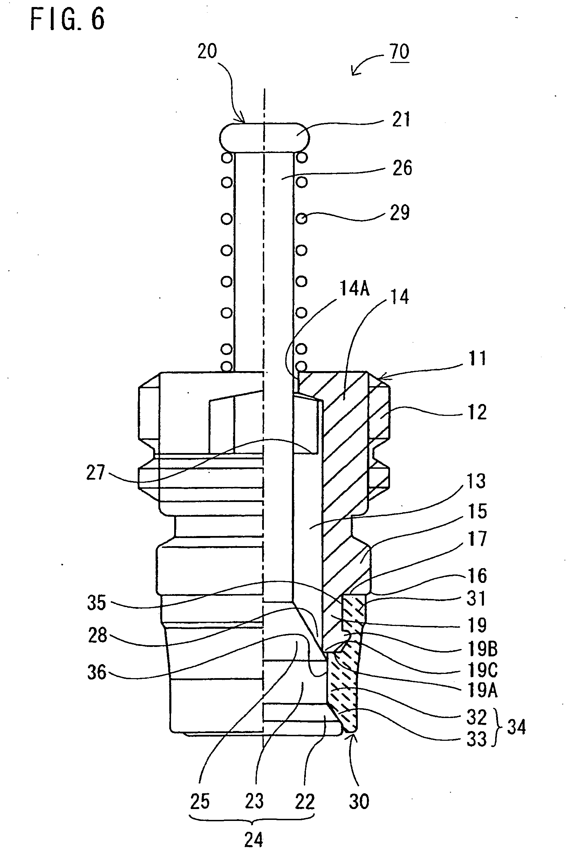

The plug 24 fitted on the moving shaft 20 includes an abutting taper 25, a columnar portion 23 and a shaft side taper 22 all aligned axially. The columnar portion 23 has a larger diameter than the inner diameter of the central hole 13. The abutment taper 25 has such a tapered structure that the diameter thereof is gradually reduced from the columnar portion 23 toward the bar-like member 26. On the other hand, the shaft side taper 22 has such a tapered structure that the diameter thereof is gradually increased from the cylindrical portion 23 in the direction opposite the bar-like member 26. When the plug 24 is biased by the spring 29 toward the distal opening 28 of the core body 11, the middle portion of the abutment taper 25 abuts the abutment edge 19C of the core body as shown in FIG. 6. Since the metal made into the core body 11 has the hardness differing from that made into the moving shaft 20, a metal seal is provided by the abutment of the abutment taper 25 of the moving shaft 20 and the abutment edge 19C of the core body 11.

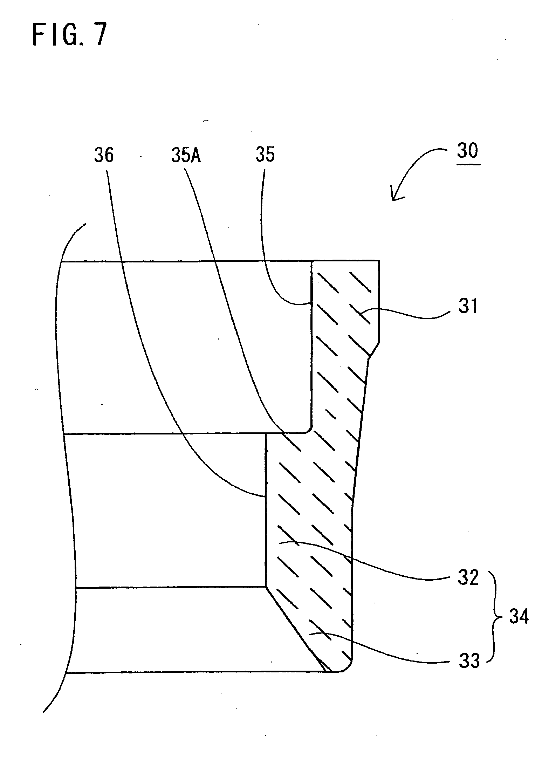

As obvious from the comparison of FIGS. 5 and 6, the cylindrical sealing member 30 is detachably attached to the distal cylinder 19 of core body 11. FIG. 7 illustrates a sectional structure of the cylindrical sealing member 30 in a natural state. As shown in the figure, the cylindrical sealing member 30 has a larger diameter portion 35 and a smaller diameter portion 36 formed inside so as to be axially aligned. The distal cylinder 19 of the core body 11 is fitted in the larger diameter portion 35 as shown in FIG. 6. A stepped portion 35A (see FIG. 7) is formed between the larger and smaller diameter portions 35 and 36. A distal end face 19A (see FIG. 5) of the distal cylinder 19 is butted against the stepped portion 35A, and an end face of the larger diameter portion 35 side of the cylindrical sealing member 30 is butted against a stepped portion 17 between the body positioning abutment 15 and the distal cylinder 19. As a result, the cylindrical sealing member 30 is positioned axially.

The cylindrical sealing member 30 has a proximal end serving as an outer sealing portion 31 with a larger outer diameter than the other portion thereof as shown in FIG. 7. The sealing member 30 further has a portion protruding ahead of the distal end face 19A of the core body 11 and serving as an inner sealing portion 34 adhering closely to the plug 24 of the moving shaft 20. The inner sealing portion 34 includes a cylindrical portion 32 with the aforesaid inwardly located smaller diameter portion 36 and a cylinder side tapered portion 33 formed by gradually spreading the open edge of the cylindrical portion 32 toward the opening.

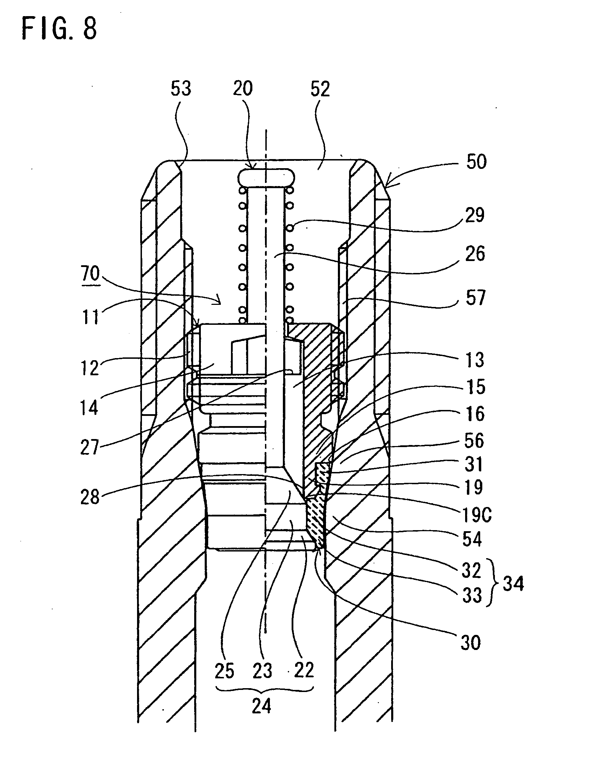

The valve core 70 of the second embodiment operates as follows. The valve core 70 is inserted into the throughbore 52 so that the female thread 57 of the throughbore is engaged with the male thread 12 of the valve core, as shown in FIG. 8. As a result, the inner sealing portion 34 of the cylindrical sealing member 30 enters the diameter-reduced portion 54, and the outer sealing portion 31 of the sealing member adheres closely to the inner wall (stem side tapered portion 56) of the throughbore 52, whereby a gap between the core body 11 and the inner face of the throughbore can be sealed.

Since the cylindrical sealing member 30 is rotatably fitted with the core body 11, the member is prevented from sliding on the valve stem 50 and accordingly from being worn. Furthermore, even if the sealing member 30 is subjected to an axial force as the result of friction between the tapered portion 56 and itself, the end of the sealing member 30 abuts the stepped portion 17 of the body positioning abutment 15, whereas the end of the core body 11 abuts the stepped portion 35Abetween the larger and smaller diameter portions 35 and 36.

When the threaded engagement between the male and female threads 12 and 57 progresses, as shown in FIG. 8, the outer edge 16 of the abutment 15 abuts the stem side tapered portion 56, whereupon a metal seal is provided. Consequently, the gap between the outer face of the core body 11 and the inner face of the throughbore 52 is closed by a double seal, namely, the metal seal and the seal by means of the outer sealing portion 31.

Furthermore, the abutment of the outer edge 16 against the tapered portion 56 prevents a further screwing of the core body 11. As a result, the outer sealing portion 31 can be prevented from being excessively pressed against the inner wall of the throughbore 52 (stem side tapered portion 56), whereupon the sealing performance of the sealingmember 30 is stabilized. Thus, attachment of the valve core 70 into the throughbore 52 is completed.

When the valve core 70 is closed as shown in FIG. 8, the spring force of the spring 29 and the pressure at the inner side of the throughbore 52 move the moving shaft 20 to the charge opening 53, so that the plug 24 is held while closing the distal opening 28 of the core body 11. More specifically, the plug 24 is pressed to the distal opening 28 side, so that the shaft side tapered portion 22 of the plug 24 adheres closely to the cylinder side tapered portion 33 of the inner sealing portion 34, whereby a gap between the distal opening 28 of the core body 11 and the plug 24 is sealed. Additionally, since the columnar portion 23 of the plug 24 is fitted in the cylindrical portion 32 of the inner sealing portion 34, the cylindrical portion 32 is deformed by the inner pressure of the throughbore 52 so as to adhere closely to the columnar portion 23, whereby a seal is provided.

The abutment tapered portion 25 of the plug 24 abuts the abutting edge 19C of the core body 11 while the tapered portion 22 of the plug 24 and the columnar portion 23 are adherent closely to the sealing member 30. As a result, the tapered portion 33 of the sealing member 30 can be prevented from being excessively pressed by the shaft side tapered portion 22 of the plug 24 and accordingly, the sealing performance can be stabilized. Since the metal made into the core body 11 has the hardness differing from that made into the moving shaft 20, a metal seal is provided by the abutment of the abutment taper 25 and the abutment edge 19C. More specifically, the gap between the distal opening 28 of the core body 11 and the plug 24 is closed by a double sealing structure, namely, the metal seal and the seal by means of the sealing member 30.

When a charge pump is connected to the charge opening 53 of the valve stem to supply compressed air into the throughbore 52, the moving shaft 20 is moved against the spring 29 by the pressure of the supplied compressed air. As a result, a gap is defined between the plug 24 and the distal opening 28, so that the compressed air is caused to flow through the charge opening 53 into the inner interior of the throughbore 52.

In the valve core 70 of the second embodiment, the inner sealing portion 34 seals the gap between the distal opening 28 of the core body 11 and the plug 24, and the outer sealing portion 31 seals the gap between the outer face of the core body 11 and the inner wall of the throughbore 52 (stem side tapered portion 56). The inner and outer sealing portions 34 and 31 are formed integrally with the sealing member 30. Consequently, the number of sealing parts can be reduced in the valve core 70 of the embodiment as compared with the conventional valve cores. Moreover, since the sealing member 30 is fitted at the core body 11 side, seal pressing parts can be eliminated from the moving shaft 20, whereupon the structure of the moving shaft can be simplified and the number of parts can be reduced. Additionally, since the compression coil spring 29 is disposed outside the core body 11, the number of parts can be reduced as compared with the case where the compression coil spring is provided inside the core body. Consequently, the valve core 70 can be composed of four discrete parts, namely, the core body 11, the moving shaft 20, the sealing member 30 and the compression coil spring 29.

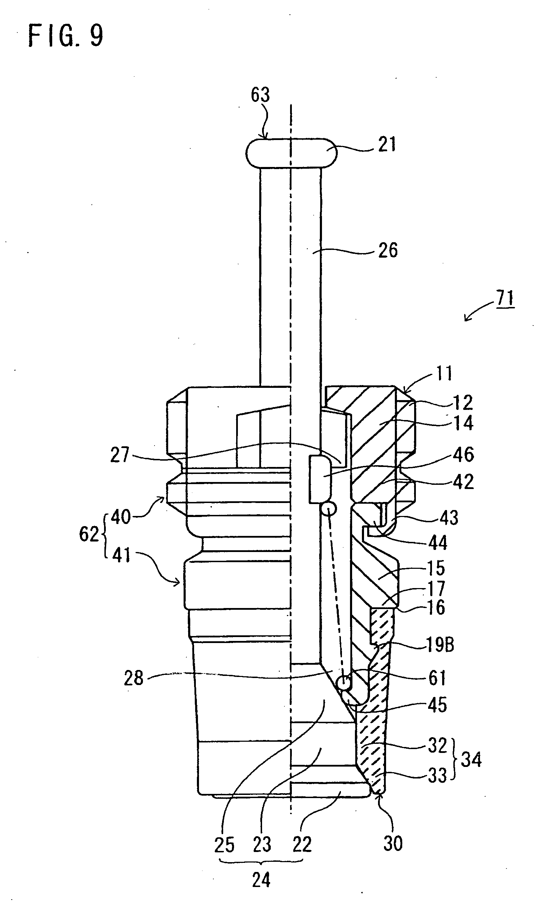

FIG. 9 illustrates a third embodiment of the invention. The valve core 71 of the third embodiment differs from the second embodiment in that a compression coil spring 61 is enclosed in the core body 62. The following describes only the differences of the third embodiment from the first one. The identical or similar parts in the third embodiment are labeled by the same reference symbols as those in the first embodiment, and the description of these parts will be eliminated.

The core body 62 in the third embodiment is dividable at an axial middle into a first body part 40 and a second body part 41. The first body part 40 constituting a proximal end side of the core body 62 includes the male thread 12 and the bridge 14. The first body part 40 has an end face opposite the bridge 14. A thin cylindrical portion 43 protrudes from the end face of the first body part 40. On the other hand, the second body part 41 constituting the distal end side of the core body 62 includes a locking flange 44 extending sidewise from an end thereof at the first body part 40 side. The locking flange 44 is inserted into an inside space of the cylindrical portion 43 to be abutted against an inner face of the cylindrical portion 43. In this state, the distal end of the cylindrical portion 43 is bent to the backside of the flange 44, whereby the first and second body portions 40 and 41 are joined together.

The second body portion 41 has a distal opening 28 with an inner edge from which a spring locking wall 45 extends inward. The moving shaft 63 includes a spring locking protrusion 46 protruding sidewise from an axial middle. The compression coil spring 61 has a conical spring structure in which a winding diameter is gradually increased from one end side toward the other end side. The compression coil spring 61 is enclosed in the second body portion 41 and a larger diameter side end of the spring is engaged with the spring locking wall 45 while the moving shaft 63 is inserted in the core body 62 through the distal opening 28. A spring locking protrusion 46 is formed on the middle of the bar-like member 26 by crimping. The first body portion 40 is then joined to the second body portion 41, and the spring locking portion 21 is formed on the distal end of the moving shaft 63 by crimping. As a result, the moving shaft 63 is biased upward as viewed in FIG. 9, and the plug 24 closes the distal opening 28 of the core body 62.

The same effect can be achieved from the above-described valve core 71 as from the valve core 70 of the second embodiment. Furthermore, since the first body portion 40 is rotatable relative to the second body portion 41, wear between the sealing member 30 and the throughbore 52 is prevented, whereby the sealing performance can be stabilized.

Modified forms will be described. In the valve cores 10 and 70 of the first and second embodiments, the metal made into the core body 11 has the hardness differing from that made into the moving shaft 20, so that the metal seal is provided. However, the moving shaft 20 and the core body 11 may only abut each other so as to be positioned, and metal seal may not be provided.

In the first to third embodiments, the male thread 12 of the valve core 10 or 70 threadedly engages the female thread 57 in the throughbore 52 so that the valve core is prevented from falling off. However, a threadedly engaging member discrete from the valve core may be provided so that the valve core is prevented by the threadedly engaging member from falling off after the valve core has been inserted into the throughbore.

Furthermore, the valve core may be fixed in the throughbore by means of a suitable adhesive agent, force fitting or other locking means.

In the first to third embodiments, the valve core of the invention is used to close and open a flow path of compressed air. However, the usage of the valve core should not be limited to this. The valve core may be used for a flow path of any fluid, for example, nitrogen, oxygen or air conditioner refrigerant. It is explicitly stated that all features disclosed in the description are intended to be disclosed separately and independently from each other the invention being defined by the claims.

## Claims

1. A valve core comprising a core mounting throughbore (52), a cylindrical core body (11) fixed inside the throughbore (52), the core body having a distal opening (28), a moving shaft (20) inserted through the core body (11) so as to be directly moved, the moving shaft having an end, a plug (24, 55) so as to open and close the distal opening (28) of the core body (11), and a biasing member (29) biasing the moving shaft (20) so that the distal opening (28) of the core body (11) is closed by the plug (24, 55), wherein
the core body (11) has a body positioning abutment (15) which is formed on an outer face thereof so as to abut the inner wall (56) of the throughbore (52), thereby providing a metal seal for a gap between the inner wall (56) of the throughbore (52) and the outer face of the core body (11); and
the plug (24, 55) abuts an inner edge (19C) of the distal opening (28) of the core body (11)
**characterized in that**
the plug (24, 55) is formed integrally at the end side of the moving shaft (20) and has an abutting taper (25, 55T) which is formed thereon so as to abut an inner edge (19C) of the distal opening (28) of the core body (11), thereby providing a metal seal for a gap between the plug (24, 55) and the distal opening (28) of the core body (11); and the core body (11) is made of a metal having a hardness differing from a hardness of an inner wall (56) of the throughbore (52) and a hardness of the moving shaft (20); and a
cylindrical sealing member (30) is detachably fitted with the core body (11), the sealing member (30) including an outer sealing portion (31) fitted with the outer periphery of the core body (11) so as to be held between the core body (11) and the inner wall (56) of the throughbore (52) thereby to adhere closely to outer periphery of the core body (11) and an inner sealing portion (34) provided to adhere closely to an outer face of the plug (24), the outer and inner sealing portions (31, 34) being formed integrally with the sealing member (30).

2. A valve core according to claim 1, **characterized in that** the inner sealing portion (34) protrudes forward from an end of the core body (11).

3. A valve core according to claim 1 or 2, **characterized in that** the inner sealing portion (34) includes a cylindrical portion (32) with a distal end and a cylinder side taper (33) formed by gradually spreading a distal end side inner diameter of the cylindrical portion (32), and the plug (24) includes a columnar portion (23) fitted into the cylindrical portion (32) of the inner sealing portion (34) and a shaft side taper (22) adhering closely to the cylinder side taper (33).

4. A valve core according to any one of claims 1 to 3, **characterized in that** the cylindrical sealing member (30) is rotatably fitted with the core body (11).

5. A valve core according to any one of claims 1 to 4, **characterized in that** the cylindrical sealing member (30) is butted against a stepped portion (17) between a portion (19) of the core body (11) with which the cylindrical sealing member (30) is fitted and the body positioning abutment (15).

6. A valve core according to any one of claims 1 to 5, **characterized in that** the cylindrical sealing member (30) includes a larger diameter portion (35) and a smaller diameter portion (36) both arranged axially, the core body (11) is fitted in the larger diameter portion (35), and the core body (11) has an end face butted against a stepped portion (35A) between the larger and smaller diameter portions (35, 36).

7. A valve core according to any one of claims 1 to 6, **characterized in that** the biasing member (29) comprises a compression coil spring (29) inserted into a portion of the moving shaft (20) protruding outward from the core body (11) so as to be compressed between a spring stopper (21) formed integrally with the end of the moving shaft (20) and the end of the core body (11).

8. A valve core according to claim 1, **characterized in that** the core body (11), the moving shaft (20) and an elastic member serving as the biasing member (29) are formed into three discrete parts.

## Patentansprüche

1. Ventileinsatz, enthaltend eine Einsatzmontagedurchgangsbohrung (52), einen zylindrischen Einsatzkörper (11), der im Inneren der Durchgangsbohrung (52) festgelegt ist, wobei der Einsatzkörper eine distale Öffnung (28) aufweist, einen sich bewegenden Schaft (20), der durch den Einsatzkörper (11) derart eingeführt ist, dass er direkt bewegt wird, wobei der sich bewegende Schaft ein Ende, einen Zapfen (24, 55) derart, dass er die distale Öffnung (28) des Einsatzkörpers (11) öffnet und schließt, enthält, und ein vorbelastendes Element (29), das den sich bewegenden Schaft (20) derart vorbelastet, dass die distale Öffnung (28) des Einsatzkörpers (11) durch den Zapfen (24, 25) geschlossen wird, wobei
der Einsatzkörper (11) einen Körperpositionieranschlag (15) aufweist, der auf einer äußeren Fläche davon derart gebildet ist, dass er gegen die innere Wand (56) der Durchgangsbohrung (52) stößt, wodurch eine metallische Dichtung für einen Spalt zwischen der inneren Wand (56) der Durchgangsbohrung (52) und der äußeren Fläche des Einsatzkörpers (11) vorgesehen wird; und
der Zapfen (24, 55) gegen eine innere Kante (19c) der distalen Öffnung (28) des Einsatzkörpers (11) stößt;
**dadurch gekennzeichnet, dass**
der Zapfen (24, 55) integral an der Endseite des sich bewegenden Schafts (20) geformt ist und einen Anschlagkonus (25, 55T) aufweist, der derart geformt ist, dass er gegen eine innere Kante (19c) der distalen Öffnung (28) des Einsatzkörpers (11) stößt, wodurch eine metallische Dichtung für einen Spalt zwischen dem Zapfen (24, 55) und der distalen Öffnung (28) des Einsatzkörpers (11) vorgesehen wird; und
der Einsatzkörper (11) aus einem Metall gebildet ist, das eine Härte aufweist, die sich von einer Härte einer inneren Wand (56) der Durchgangsbohrung (52) und einer Härte des sich bewegenden Schafts (20) unterscheidet; und
ein zylindrisches Dichtelement (30) lösbar auf den Einsatzkörper (11) aufgesetzt ist, wobei das Dichtelement (30) einen äußeren Dichtbereich (31), der auf den äußeren Umfang des Einsatzkörpers (11) aufgesetzt ist, so dass er zwischen dem Einsatzkörper (11) und der inneren Wand (56) der Durchgangsbohrung (52) gehalten wird, wodurch er dicht an dem äußeren Umfang des Einsatzkörpers (11) haftet, und einen inneren Dichtbereich (34) enthält, der vorgesehen ist, dass er dicht an einer äußeren Fläche des Zapfens (24) haftet, wobei der äußere und der innere Dichtbereich (31, 34) integral mit dem Dichtelement (30) geformt sind.

2. Ventileinsatz nach Anspruch 1, **dadurch gekennzeichnet, dass** der innere Dichtbereich (34) nach vorne von einem Ende des Einsatzkörpers (11) vorsteht.

3. Ventileinsatz nach Anspruch 1 oder 2, **dadurch gekennzeichnet, dass** der innere Dichtbereich (34) einen zylindrischen Bereich (32) mit einem distalen Ende und einem zylinderseitigen Konus (33) enthält, der durch graduelles Aufweiten eines inneren Durchmessers der distalen Endseite des zylindrischen Bereichs (32) geformt ist, und der Zapfen (24) einen säulenartigen Bereich (23) enthält, der in den zylindrischen Bereich (32) des inneren Dichtbereichs (34) eingesetzt ist, und einen schaftseitigen Konus (22), der dicht an dem zylinderseitigen Konus (33) haftet.

4. Ventileinsatz nach einem der Ansprüche 1 bis 3, **dadurch gekennzeichnet, dass** das zylindrische Dichtelement (30) drehbar in den Einsatzkörper (11) eingesetzt ist.

5. Ventileinsatz nach einem der Ansprüche 1 bis 4, **dadurch gekennzeichnet, dass** das zylindrische Dichtelement (30) gegen einen gestuften Bereich (17) zwischen einem Bereich (19) des Einsatzkörpers (11), auf den das zylindrische Dichtelement (30) aufgesetzt ist, und dem Körperpositionieranschlag (15) in Anlage gebracht ist.

6. Ventileinsatz nach einem der Ansprüche 1 bis 5, **dadurch gekennzeichnet, dass** das zylindrische Dichtelement (30) einen Bereich (35) größeren Durchmessers und einen Bereich (36) kleineren Durchmessers, die beide axial angeordnet sind, aufweist, der Einsatzkörper (11) in dem Bereich (35) größeren Durchmessers eingesetzt ist und der Einsatzkörper (11) eine Endfläche hat, die gegen einen gestuften Bereich (35a) zwischen dem Bereich (35) größeren Durchmessers und dem Bereich (36) kleineren Durchmessers in Anlage gebracht ist.

7. Ventileinsatz nach einem der Ansprüche 1 bis 6, **dadurch gekennzeichnet**, das das vorbelastende Element (29) eine Kompressionsschraubenfeder (29) enthält, die in einen Bereich des sich bewegenden Schafts (20) eingeführt ist, der nach außen von dem Einsatzkörper (11) derart vorsteht, so dass sie zwischen einem Federanschlag (21), der integral mit dem Ende des sich bewegenden Schafts (20) geformt ist, und dem Ende des Einsatzkörpers (11) komprimiert wird.

8. Ventileinsatz nach Anspruch 1, **dadurch gekennzeichnet, dass** der Einsatzkörper (11), der sich bewegende Schaft (20) und ein elastisches Element, das als das vorbelastende Element (29) dient, als drei einzelne Bauteile ausgebildet sind.

## Revendications

1. Mécanisme de valve comprenant un trou traversant (52) de montage de mécanisme de valve, un corps de mécanisme cylindrique (11) fixé à l'intérieur du trou traversant (52), le corps de mécanisme ayant une ouverture distale (28), une tige mobile (20) insérée à travers le corps de mécanisme (11) de façon à être déplacée directement, la tige mobile ayant une extrémité, un bouchon (24, 55) permettant d'ouvrir et de fermer l'ouverture distale (28) du corps de mécanisme (11), et un élément de déviation (29) déviant la tige mobile (20) de façon telle que l'ouverture distale (28) du corps de mécanisme (11) est fermée par le bouchon (24, 55), dans lequel
le corps de mécanisme (11) a une butée (15) de positionnement du corps qui est formée sur une face externe de celui-ci de façon à buter contre la paroi interne (56) du trou traversant (52), fournissant alors un joint métallique pour un espace entre la paroi interne (56) du trou traversant (52) et la face externe du corps de mécanisme (11) ; et
le bouchon (24, 55) bute contre un bord interne (19C) de l'ouverture distale (28) du corps de mécanisme (11),
**caractérisé en ce que** le bouchon (24, 55) est formé de façon intégrante au niveau du côté d'extrémité de la tige mobile (20), et a un tronçon de cône de butée (25, 55T) qui est formé dessus de façon à buter contre un bord interne (19C) de l'ouverture distale (28) du corps de mécanisme (11), fournissant alors un joint métallique pour un espace entre le bouchon (24, 55) et l'ouverture distale (28) du corps de mécanisme (11) ; et
**en ce que** le corps de mécanisme (11) est fait de métal ayant une dureté différente de la dureté d'une paroi interne (56) du trou traversant (52) et de la dureté de la tige mobile (20) ; et
**en ce qu'**un élément d'étanchéité cylindrique (30) est associé de façon amovible au corps de mécanisme (11), l'élément d'étanchéité (30) comprenant une portion d'étanehéité externe (31) adaptée à la périphérie externe du corps de mécanisme (11) de façon à être maintenu entre le corps de mécanisme (11) et la paroi interne (56) du trou traversant (52) pour alors adhérer intimement à la périphérie externe du corps de mécanisme (11), et une portion d'étanchéité interne (34) prévue pour adhérer intimement à une face externe du bouchon (24), les portions d'étanchéité interne et externe (31, 34) étant formées de façon intégrante avec l'élément d'étanchéité (30).

2. Mécanisme de valve selon la revendication 1, **caractérisé en ce que** la portion d'étanchéité interne (34) fait saillie vers l'avant depuis une extrémité du corps de mécanisme (11).

3. Mécanisme de valve selon la revendication 1 ou 2, **caractérisé en ce que** la portion d'étanchéité interne (34) comprend une portion cylindrique (32) avec une extrémité distale et une inclinaison latérale cylindrique (33) formée en augmentant graduellement un diamètre interne latéral d'extrémité distale de la portion cylindrique (32), et **en ce que** le bouchon (24) comprend une portion en forme de colonne (23) insérée dans la portion cylindrique (32) de la portion d'étanchéité interne (34) et une inclinaison latérale de tige (22) qui adhère intimement à l'inclinaison latérale cylindrique (33).

4. Mécanisme de valve selon l'une quelconque des revendications 1 à 3, **caractérisé en ce que** l'élément d'étanchéité cylindrique (30) est associé au corps de mécanisme (11) en rotation.

5. Mécanisme de valve selon l'une quelconque des revendications 1 à 4, **caractérisé en ce que** l'élément d'étanchéité cylindrique (30) bute contre une portion étagée (17), entre une portion (19) du corps de mécanisme (11) avec laquelle l'élément d'étanchéité cylindrique (30) est associé et la butée de positionnement de corps (15).

6. Mécanisme de valve selon l'une quelconque des revendications 1 à 5, **caractérisé en ce que** l'élément d'étanchéité cylindrique (30) comprend une portion de plus grand diamètre (35) et une portion de plus petit diamètre (36) disposées toutes deux axialement, **en ce que** le corps de mécanisme (11) est monté dans la portion de plus grand diamètre (35) et le corps de mécanisme (11) a une face d'extrémité qui bute contre une portion étagée (35A) entre les portions de plus grand et de plus petit diamètre (35, 36).

7. Mécanisme de valve selon l'une quelconque des revendications 1 à 6, **caractérisé en ce que** l'élément de déviation (29) comprend un ressort hélicoïdal de compression (29) inséré dans une portion de la tige mobile (20) qui dépasse vers l'extérieur depuis le corps de mécanisme (11) de façon à être comprimé entre une butée de ressort (21), formée de façon intégrante avec l'extrémité de la tige mobile (20), et l'extrémité du corps de mécanisme (11).

8. Mécanisme de valve selon la revendication 1, **caractérisé en ce que** le corps de mécanisme (11), la tige mobile (20) et un élément élastique servant d'élément de déviation (29) sont formés en trois parties séparées.
